# EUROPÄISCHE PATENTSCHRIFT

(11) **EP 3 071 457 B1**
(45) Veröffentlichungstag und Bekanntmachung des Hinweises auf die Patenterteilung: **20.02.2019**
(21) Anmeldenummer: 14802612.3
(22) Anmeldetag: 13.11.2014
(51) Int. Cl.: B60T 8/26, B60T 8/40

(54) **BREMSANLAGE FÜR KRAFTFAHRZEUGE**
BRAKE SYSTEM FOR MOTOR VEHICLES
SYSTÈME DE FREINAGE POUR VÉHICULES À MOTEUR

(30) Priorität: 21.11.2013 DE 102013223861
(43) Veröffentlichungstag der Anmeldung: 28.09.2016
(73) Patentinhaber: Continental Teves AG & Co. OHG, 60488 Frankfurt am Main (DE)
(72) Erfinder: FEIGEL, Hans-Jörg, 61191 Rosbach (DE); WIDMANN, Daniel, 71032 Böblingen (DE)
(86) Internationale Anmeldenummer: PCT/EP2014/074427
(87) Internationale Veröffentlichungsnummer: WO 2015/074935

(56) Entgegenhaltungen:
- DE-A1-102009 048 286
- DE-A1-102012 204 263
- DE-A1-102012 205 859
- DE-A1-102012 205 860

## Beschreibung

Die Erfindung betrifft eine Bremsanlage für Kraftfahrzeuge gemäß dem Oberbegriff von Anspruch 1.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt eine Betätigung der Radbremsen allein durch die Muskelkraft des Fahrzeugführers (unverstärkte Rückfallbetriebsart).

Aus der WO 2011/029812 A1 ist eine elektrohydraulische Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In der Rückfallbetriebsart werden die Radbremsen mittels des Bremspedal betätigbaren Hauptbremszylinders mit dem durch den Fahrer aufgebrachten Druck beaufschlagt. Als nachteilig wird bei der vorbekannten Bremsanlage empfunden, dass bei einem Ausfall der Ansteuerung oder des Antriebs der elektrisch steuerbaren Druckbereitstellungseinrichtung vom Fahrer große Bremspedalwege und/oder Bremspedalkräfte aufgebracht werden müssen, um eine ausreichende Betriebsbremsverzögerung zu erreichen.

In der DE 10 2012 205 862 A1 ist eine "Brake-by-wire"-Bremsanlage beschrieben, welche neben einem bremspedalbetätigbaren Hauptbremszylinder eine erste und eine zweite Druckbereitstellungseinrichtung umfasst. Die Druckanschlüsse der zweiten Druckbereitstellungseinrichtung sind mit den eingangsseitigen Anschlüssen der Einlassventile der Radbremsen verbunden, so dass die Einlassventile zwischen dem jeweiligen Druckanschluss der zweiten Druckbereitstellungseinrichtung und der Radbremse angeordnet sind. Aufgrund der Drosselwirkung der Einlassventile kann es zu einer Behinderung des von der zweiten Druckquelle an die Radbremse abgegebenen Druckmittelflusses kommen. Weiterhin wird das Verstärkungsmodul mit der zweiten Druckbereitstellungseinrichtung je nach Anordnung und Ausführung anders an das Hauptmodul angeschlossen, so dass verschiedene Varianten und damit aufwändige Produktionskonzepte bereitgehalten werden müssen.

In der DE 10 2012 205 859 A1 wird eine "Brake-by-wire"-Bremsanlage für Kraftfahrzeuge offenbart mit einem Bremspedal-betätigbaren Hauptbremszylinder, einem Druckmittelvorratsbehälter, einem elektrisch betätigbaren Einlass- und Auslassventil je Radbremse, einem elektrisch betätigbaren Trennventil je Bremskreis, welches zwischen dem Hauptbremszylinder und den Einlassventilen des Bremskreises angeordnet ist, einer ersten elektrisch steuerbaren Druckbereitstellungseinrichtung zur Druckbeaufschlagung der Radbremsen und einer zweiten elektrisch steuerbaren Druckbereitstellungseinrichtung in Form zweier Pumpen, deren Sauganschluss jeweils über eines der Trennventile mit einem der Druckräume des Hauptbremszylinders verbunden ist und deren Druckanschluss mit den Einlassventilen des Bremskreises verbunden ist. Mittels der zweiten elektrisch steuerbaren Druckbereitstellungseinrichtung kann eine Verstärkung des vom Fahrzeugführer in der hydraulischen Rückfallebene erzeugten Druckes durchgeführt werden. Auch hier kann es aufgrund der Drosselwirkung der Einlassventile zu einer Behinderung des von der zweiten Druckbereitstellungseinrichtung an die Radbremse abgegebenen Druckmittelflusses kommen. Weiterhin wird als nachteilig angesehen, dass das Druckmittelvolumen für die zweite Druckbereitstellungseinrichtung im Hauptbremszylinder bereitgehalten wird.

Die DE 10 2009 048 286 A1 offenbart eine "Brake-by-wire"-Bremsanlage mit einer Bremspedal-betätigbaren hydraulischen Kolben-Zylinder-Anordnung, einer einzigen elektrisch steuerbaren Druckbereitstellungseinrichtung zur Betätigung der Radbremsen in der "Brake-by-wire" Betriebsart sowie einer Trennkolbeneinrichtung je Radbremse. Zur Realisierung einer mechanisch-hydraulischen Rückfallebene wirkt eine am Bremspedal angekoppelte Kolbenstange mit einem mechanischen Ansteuerungselement zusammen, das in der Rückfallebene der mechanischen Ansteuerung der Trennkolbeneinrichtungen dient.

Es ist Aufgabe der vorliegenden Erfindung, eine Bremsanlage der eingangs genannten Art dahingehend zu verbessern, dass, auch bei Fahrzeugen mit einer großen Druckmittelvolumenaufnahme durch die Bremsen, der Fahrzeugführer mit komfortablen Bremspedalkräften und Bremspedalwegen eine sichere Bremsung durchführen kann.

Diese Aufgabe wird erfindungsgemäß durch eine Bremsanlage gemäß Anspruch 1 gelöst.

Der Erfindung liegt der Gedanke zugrunde, dass die Bremsanlage neben der ersten elektrisch steuerbaren Druckbereitstellungseinrichtung zur Druckbeaufschlagung der Radbremsen in der "Brake-by-wire"-Betriebsart eine zweite elektrisch steuerbare Druckbereitstellungseinrichtung umfasst, welche zumindest einen Sauganschluss und einen Druckanschluss besitzt, wobei der Sauganschluss mit dem Druckmittelvorratsbehälter verbunden ist und der Druckanschluss mit zumindest einer Radbremse ohne Zwischenschaltung eines Ventils verbunden ist.

Ein Vorteil der Erfindung liegt darin, dass mittels der zweiten Druckbereitstellungseinrichtung eine Verkürzung des vom Fahrzeugführer aufzubringenden Bremspedalwegs und/oder der Bremspedalkraft erreicht wird, so dass der Fahrzeugführer trotz Ausfall der ersten Druckbereitstellungseinrichtung auch bei großen Fahrzeugen mit hohem Druckmittelvolumenbedarf komfortabel und sicher eine ausreichende Betriebsbremsverzögerung erreichen kann.

Ein weiterer Vorteil der Erfindung liegt darin, dass ein für praktische Anwendungen unbegrenztes Druckmittelvolumen für die zweite Druckbereitstellungseinrichtung zur Verfügung steht, da der oder jeder Sauganschluss der zweiten Druckbereitstellungseinrichtung mit dem unter Atmosphärendruck stehenden Druckmittelvorratsbehälter verbunden ist.

Ein weiterer Vorteil der Erfindung liegt darin, dass das Druckmittel ungehindert, z.B. ohne Drosselwirkung eines Ventils, von der zweiten Druckquelle an die Radbremse abgegeben werden kann.

Bevorzugt ist der Sauganschluss ohne Zwischenschaltung eines Ventils mit dem Druckmittelvorratsbehälter verbunden. Besonders bevorzugt ist der Sauganschluss direkt und ohne Zwischenschaltung einer weiteren hydraulischen Komponente mit dem Druckmittelvorratsbehälter verbunden.

Bevorzugt ist der Druckanschluss direkt, d.h. ohne Zwischenschaltung eines Ventils oder über eine weitere hydraulische Komponente, mit der Radbremse verbunden.

Bevorzugt ist die zweite Druckbereitstellungseinrichtung hydraulisch zumindest zweikreisig ausgebildet, wobei jeder der Druckanschlüsse mit zumindest einer Radbremse ohne Zwischenschaltung eines Ventils verbunden ist.

Gemäß einer Weiterbildung der Erfindung umfasst die zweite Druckbereitstellungseinrichtung zumindest zwei, von einem Elektromotor gemeinsam angetriebene hydraulische Pumpen mit je einem Sauganschluss und einem Druckanschluss, wobei jeder der Druckanschlüsse mit zumindest einer Radbremse ohne Zwischenschaltung eines Ventils verbunden ist. Besonders bevorzugt sind die Sauganschlüsse der ersten und der zweiten Pumpe mit dem Druckmittelvorratsbehälter, vorteilhafterweise ohne Zwischenschaltung eines Ventils, verbunden.

Jeder der Druckanschlüsse der ersten und der zweiten Pumpe ist bevorzugt mit genau einer Radbremse verbunden. Besonders bevorzugt handelt es sich bei den Radbremsen um die Radbremsen der Vorderräder.

Der Druckanschluss ist vorteilhafterweise mit einer Verbindungsleitung zwischen der Radbremse und dem ausgangsseitigen Anschluss des Einlassventils verbunden.

Zur Erhöhung der Verfügbarkeit sind die Druckanschlüsse der ersten und der zweiten Pumpe mit Radbremse unterschiedlicher Bremskreise verbunden.

Für die erste und die zweite Pumpe ist bevorzugt jeweils ein elektrisch betätigbares Ventil vorgesehen, welches der Pumpe parallel geschaltet ist. Vorteilhafterweise ist das Ventil stromlos geschlossen ausgeführt. Alternativ oder zusätzlich ist es bevorzugt, dass das Ventil analogisiert oder analog angesteuert ausgeführt ist.

Zur Regelung des zusätzlichen Druckmittelvolumens der zweiten Druckbereitstellungseinrichtung ist für die erste und die zweite Pumpe jeweils ein elektrisch betätigbares, vorteilhafterweise stromlos geschlossenes, Ventil vorgesehen, welches der Pumpe parallel geschaltet ist. Eine besonders genaue Regelung kann mittels eines analogisierten oder analog angesteuerten Ventils erzielt werden.

Bevorzugt umfasst die Bremsanlage je Bremskreis ein elektrisch betätigbares, vorteilhafterweise stromlos offenes, Trennventil zur hydraulischen Verbindung oder Trennung des Hauptbremszylinders von den Radbremsen des Bremskreises. Das Trennventil ist jeweils besonders bevorzugt in einer hydraulischen Verbindungsleitung zwischen dem Druckraum des Hauptbremszylinders und einem die Einlassventile mit Druck versorgenden und "by-wire" druckbeaufschlagbaren Bremskreisabschnitt angeordnet und ermöglicht so ein wahlweises Verschließen oder Öffnen der hydraulischen Verbindung zwischen Druckraum und Bremskreisabschnitt.

Die Bremsanlage umfasst bevorzugt je Bremskreis ein elektrisch betätigbares, vorteilhafterweise stromlos geschlossenes, Zuschaltventil zur hydraulischen Verbindung oder Trennung der ersten Druckbereitstellungseinrichtung von den Radbremsen. Das Zuschaltventil ist besonders bevorzugt jeweils in einer hydraulischen Verbindungsleitung zwischen der ersten Druckbereitstellungseinrichtung und dem Bremskreisabschnitt angeordnet und ermöglicht so ein wahlweises Öffnen oder Verschließen der hydraulischen Verbindung zwischen erster Druckbereitstellungseinrichtung und Bremskreisabschnitt.

Die Bremsanlage umfasst bevorzugt eine Simulationseinrichtung, welche in der "Brake-by-wire"-Betriebsart dem Fahrzeugführer ein angenehmes Bremspedalgefühl vermittelt. Die Simulationseinrichtung ist besonders bevorzugt mittels eines elektrisch oder mechanisch betätigbaren Simulatorfreigabeventils hydraulisch mit zumindest einem Druckraum des Hauptbremszylinders verbindbar.

Eine erste elektronische Steuer- und Regeleinheit ist bevorzugt zur Ansteuerung der ersten elektrisch steuerbaren Druckbereitstellungseinrichtung im Sinne einer Regelung oder Steuerung des von ihr abgegebenen hydraulischen Druckes ausgebildet. Weiterhin werden durch die erste Steuer- und Regeleinheit vorteilhafterweise die Trennventile und Zuschaltventile und ggf. ein Simulatorfreigabeventil der Bremsanlage geregelt bzw. gesteuert.

Bevorzugt umfasst die Bremsanlage zusätzlich ein elektrisch betätigbares Auslassventil je Radbremse zum Einstellen radindividueller Bremsdrücke.

Bevorzugt umfasst die Bremsanlage ein Einlassventil und ein Auslassventil pro Radbremse zum Einstellen radindividueller Bremsdrücke, die aus den Drücken der genannten Bremskreisabschnitte zugeordneten Bremskreisdrücken abgeleitet werden, wobei die Einlassventile im nicht angesteuerten Zustand den Bremskreisabschnittsdruck zu den Radbremsen weiterleiten und im angesteuerten Zustand einen Radbremsdruckaufbau begrenzen oder verhindern, und wobei die Auslassventile im nicht angesteuerten Zustand ein Abströmen von Druckmittel aus den Radbremsen in einen Druckmittelvorratsbehälter verhindern und im angesteuerten Zustand zulassen und kontrollieren, wobei die Einlassventile geschlossen werden, so dass ein Radbremsdruckabbau erfolgt.

Die Einlassventile und Auslassventile werden bevorzugt von der ersten elektronischen Steuer- und Regeleinheit angesteuert. Besonders bevorzugt sind die Einlassventile und Auslassventile in einer Baueinheit mit dem Hauptbremszylinder, der ersten elektrisch steuerbaren Druckbereitstellungseinrichtung und der Simulationseinrichtung angeordnet. Weiterhin ist es vorteilhaft, wenn ebenso die Trennventile, die Zuschaltventilen und die erste elektronische Steuer- und Regeleinheit in der Baueinheit angeordnet sind.

Gemäß einer Weiterbildung der Erfindung ist eine Druckerfassungseinrichtung vorgesehen, welche den druckanschlussseitigen Druck der zweiten Druckbereitstellungseinrichtung erfasst, wodurch eine Überwachung des Bremskreisdruckes möglich ist.

Zur Ansteuerung der zweiten Druckbereitstellungseinrichtung und zur Auswertung der Ausgangssignale der Druckerfassungseinrichtung umfasst die Bremsanlage bevorzugt eine zweite elektronische Steuer- und Regeleinheit.

Die zweite Druckbereitstellungseinrichtung, die Druckerfassungseinrichtung und die zweite elektronische Steuer- und Regeleinheit sind bevorzugt in einer eigenständigen Baugruppe angeordnet, so dass ein modularer Aufbau erreicht wird, welcher die Prüfbarkeit und Montage der Bremsanlage vereinfacht. Diese Baugruppe umfasst vorteilhafterweise auch die der zweiten Druckbereitstellungseinrichtung parallel geschalteten Ventile.

Um bei einem Ausfall des Bordnetzes eine volumenverstärkte Rückfallbetriebsart aufrecht erhalten zu können, werden bevorzugt die zweite Druckbereitstellungseinrichtung, die Druckerfassungseinrichtung und die zweite elektronische Steuer- und Regeleinheit, besonders bevorzugt die eigenständige Baugruppe, von einer eigenständigen elektrische Energiequelle mit Energie versorgt.

Bevorzugt wird die erste elektrisch steuerbare Druckbereitstellungseinrichtung durch eine Zylinder-Kolben-Anordnung gebildet, deren Kolben durch einen elektromechanischen Aktuator betätigbar ist. Ein solcher elektrohydraulischer Aktuator arbeitet besonders dynamisch, sehr leise und verträgt problemlos die für Bremsanlagen erforderlichen Lastwechselzahlen.

Die Bremsanlage umfasst weiterhin bevorzugt zumindest einen Drucksensor zur Erfassung eines Druckes des Hauptbremszylinders. Weiterhin umfasst die Bremsanlage vorteilhafterweise einen Weg- oder Winkelsensor zur Erfassung einer Lage oder Position der ersten Druckbereitstellungseinrichtung sowie einen Weg- oder Winkelsensor zur Erfassung einer Bremspedalbetätigung. Zumindest die Signale der drei erst genannten Sensoren werden bevorzugt von der ersten elektronischen Steuer- und Regeleinheit verarbeitet.

Weitere bevorzugte Ausführungsformen der Erfindung ergeben sich aus den Unteransprüchen und der nachfolgenden Beschreibung anhand von Figuren.

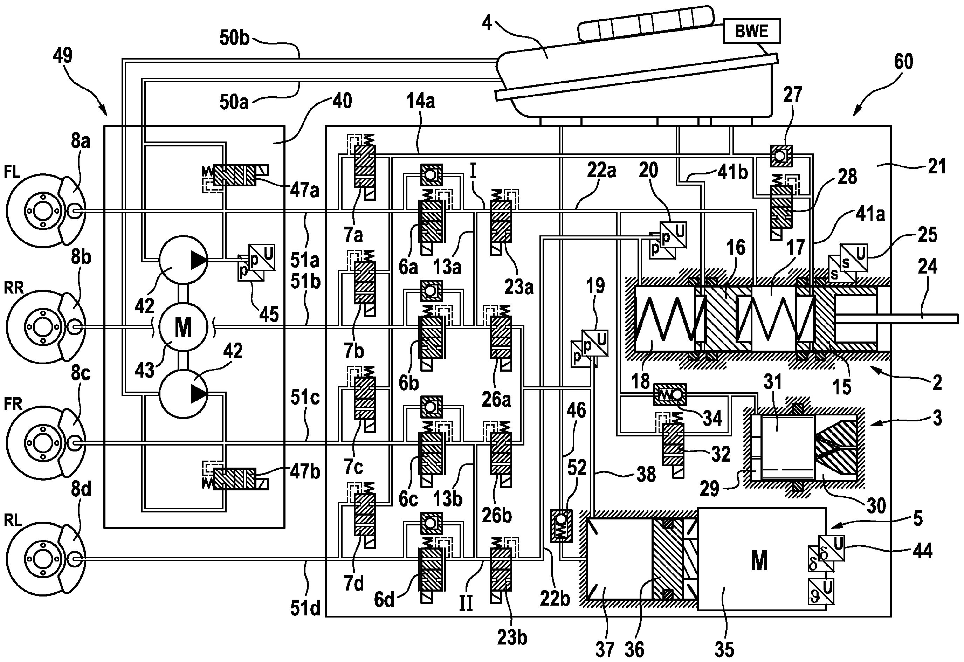

Es zeigt schematisch
- Fig. 1: ein Ausführungsbeispiel einer erfindungsgemäßen Bremsanlage.

In Fig. 1 ist ein Ausführungsbeispiel einer erfindungsgemäßen Bremsanlage schematisch dargestellt. Die Bremsanlage umfasst im Wesentlichen eine mittels eines (nicht dargestellten) Betätigungs- bzw. Bremspedals betätigbare hydraulische Betätigungseinheit 2, einen mit der hydraulischen Betätigungseinheit 2 zusammen wirkenden Wegsimulator bzw. eine Simulationseinrichtung 3, einen der hydraulischen Betätigungseinheit 2 zugeordneten, unter Atmosphärendruck stehenden Druckmittelvorratsbehälter 4, eine erste elektrisch steuerbare Druckbereitstellungseinrichtung 5, eine zweite elektrisch steuerbare Druckbereitstellungseinrichtung 49, eine (nicht dargestellte) erste elektronische Steuer- und Regeleinheit und eine elektrisch steuerbare Druckmodulationseinrichtung zum Einstellen radindividueller Bremsdrücke.

Die nicht näher bezeichnete Druckmodulationseinrichtung umfasst beispielsgemäß je Radbremse 8a-8d eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8a-8d angeschlossen sind. Die Eingangsanschlüsse der Einlassventile 6a-6d werden über Bremskreisabschnitte 13a, 13b mit Drücken versorgt, die in einer "Brake-by-Wire"-Betriebsart aus einem Systemdruck abgeleitet werden, der in einer an einen Druckraum 37 der ersten elektrisch steuerbaren Druckbereitstellungseinrichtung 5 angeschlossenen Systemdruckleitung 38 vorliegt. Den Einlassventilen 6a-6d ist jeweils ein zu den Bremskreisabschnitten 13a, 13b hin öffnendes, nicht näher bezeichnetes Rückschlagventil parallel geschaltet. In einer Rückfallbetriebsart können die Bremskreisabschnitte 13a, 13b über hydraulische Leitungen 22a, 22b mit den Drücken der Druckräume 17, 18 der Betätigungseinheit 2 beaufschlagt werden. Die Ausgangsanschlüsse der Auslassventile 7a-7d sind über eine Rücklaufleitung 14a mit dem Druckmittelvorratsbehälter 4 verbunden. Zum Erfassen des in der Systemdruckleitung 38 herrschenden Druckes ist ein vorzugsweise redundant ausgeführter Drucksensor 19 vorgesehen. Beispielsgemäß sind die Radbremsen 8a bzw. 8b dem linken Vorderrad FL bzw. dem rechten Hinterrad RR und die Radbremsen 8c bzw. 8d dem rechten Vorderrad FR bzw. dem linken Hinterrad RL zugeordnet (sog. Diagonalaufteilung).

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung (die Druckausgleichsleitung 41a ist abschnittsweise zusammengefasst mit der Rücklaufleitung 14a dargestellt, getrennte Leitungen sind jedoch auch möglich), wobei diese durch eine Relativbewegung der Kolben 15, 16 im Gehäuse 21 absperrbar sind, und andererseits mittels der hydraulischen Leitungen 22a, 22b mit den bereits genannten Bremskreisabschnitten 13a, 13b in Verbindung. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Je ein Trennventil 23a, 23b trennt die Bremskreise I, II in einen vom Hauptbremszylinder 2 druckbeaufschlagbaren Bremskreis- oder Leitungsabschnitt 22a, 22b und den bereits genannten, in der "Brake-by-wire"-Betriebsart von der ersten Druckbereitstellungseinrichtung 5 druckbeaufschlagbaren Bremskreisabschnitt 13a, 13b. Die Trennventile 23a, 23b sind als elektrisch betätigbare, vorzugsweise stromlos offene (SO-), 2/2-Wegeventil ausgebildet. Durch die Trennventile 23a, 23b kann die hydraulische Verbindung zwischen den Druckräumen 17, 18 und den Bremskreisabschnitten 13a, 13b abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Wegsimulator 3 ist hydraulisch an den Hauptbremszylinder 2 angekoppelt und besteht im Wesentlichen aus einer Simulatorkammer 29, einer Simulatorfederkammer 30 sowie einem die beiden Kammern 29, 30 voneinander trennenden Simulatorkolben 31. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist beispielsgemäß mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die erste elektrisch steuerbare Druckbereitstellungseinrichtung 5 ist als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Erfassen der Temperatur der Motorwicklung verwendet werden. Der Kolben 36 begrenzt den Druckraum 37. Der durch die Kraftwirkung des Kolbens 36 auf das im Druckraum 37 eingeschlossene Druckmittel erzeugte Aktuatordruck wird in die Systemdruckleitung 38 eingespeist und mit dem Systemdrucksensor 19 erfasst. In der "Brake-by-Wire"-Betriebsart wird die Systemdruckleitung 38 über die Zuschaltventile 26a, 26b mit den Bremskreisabschnitten 13a, 13b verbunden. Auf diesem Weg erfolgt bei einer Normalbremsung ein Radbremsdruckauf- und -abbau für alle Radbremsen 8a-8d. Beim Druckabbau strömt dabei das vorher aus dem Druckraum 37 des Aktuators 5 in die Radbremsen 8a-8d verschobene Druckmittel auf dem gleichen Wege wieder in den Druckraum 37 des Aktuators 5 zurück. Dagegen strömt bei einer Bremsung mit radindividuell unterschiedlich, mit Hilfe der Modulationsventile 6a-6d, 7a-7d geregelten Radbremsdrücken der über die Auslassventile 7a-7d abgelassene Druckmittelanteil in den Druckmittelvorratsbehälter 4. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Vorratsbehälter 4 über eine Verbindungsleitung 46 mit einem als in Strömungsrichtung zum Aktuator öffnenden Rückschlagventil ausgebildeten Nachsaugventil 52 in den Akuatordruckraum 37 strömt.

Weiterhin umfasst die Bremsanlage eine zweite elektronisch steuerbare Druckbereitstellungseinrichtung 49, welche beispielsgemäß in einem eigenständigen Modul 40, z.B. mit einer eigenen (nicht dargestellten) elektronischen Steuer- und Regeleinheit, ausgeführt ist. Im Falle eines Ausfalls der ersten Druckbereitstellungseinrichtung 5 kann durch Aktivierung der zweiten Druckbereitstellungseinrichtung 49 Druckmittelvolumen zur Verfügung gestellt werden.

Druckbereitstellungseinrichtung 49 ist beispielsgemäß als eine zweikreisige Pumpe 42 ausgeführt, die von einem Elektromotor 43 angetrieben wird.

Die Saugseiten der Pumpe 42 sind beispielsgemäß jeweils mit einer Behälteranschlussleitung 50a, 50b mit dem Druckmittelvorratsbehälter 4 verbunden. In den Behälteranschlussleitungen 50a, 50b ist keine Ventil oder eine andere hydraulische Komponenten angeordnet.

Die Druckseiten der Pumpe 42 sind beispielsgemäß jeweils mit der Verbindungsleitung 51a bzw. 51c hydraulisch verbunden, welche die Radbremse 8a bzw. 8c mit dem ausgangsseitigen Anschluss des ihr zugeordneten Einlassventils 6a bzw. 6c, bzw. mit dem eingangsseitigen Anschluss des ihr zugeordneten Auslassventils 7a bzw. 7c, verbindet. Die Druckanschlüsse der zweiten Druckbereitstellungseinrichtung sind somit jeweils ohne Zwischenschaltung eines Ventils mit der Radbremse 8a, 8c verbunden, da die Druckleitungen der Pumpe jeweils hinter den Einlassventilen, also zwischen Einlassventil und Radbremse, angeschlossen sind.

Die zweite Druckbereitstellungseinrichtung ist beispielsgemäß nicht mit der Verbindungsleitung 51b bzw. 51d, welche die Radbremse 8b bzw. 8d mit dem ausgangsseitigen Anschluss des ihr zugeordneten Einlassventils 6a bzw. 6c verbindet, hydraulisch verbunden.

Das Motor-Pumpen-Aggregat 42, 43 ist vorzugsweise vom Typ einer vom Elektromotor 43 über einen Exzenter angetriebenen Kolbenpumpe 42 ausgebildet, einer Bauform, die in bekannten Bremssystemen als Rückförderpumpe bereits millionenfach eingesetzt wird. Diese kann in sehr kompakter Baugröße realisiert werden.

Modul 40 bzw. Druckbereitstellungseinrichtung 49 ist bevorzugt hydraulisch zwischen dem Druckmittelvorratsbehälter 4 und den beiden Radbremsen 8a, 8c einer Fahrzeugachse, beispielsgemäß der Vorderachse, angeordnet. Druckbereitstellungseinrichtung 49 saugt also Druckmittel aus dem Druckmittelvorratsbehälter 4 an und speist das von ihr abgegebene Druckmittel jeweils direkt (ohne zwischenliegende Ventile) in eine, insbesondere einzige, Radbremse 8a, 8c je eines Bremskreises I, II ein.

Druckbereitstellungseinrichtung 5 kann das von ihr abgegebene Druckmittel (bei geöffneten Zuschaltventilen 26a, 26b) über die Systemdruckleitung 38 und die Bremskreisabschnitte 13a, 13b in jeweils die beiden Radbremsen 8a, 8b bzw. 8c, 8d des Bremskreises I, II einspeisen. Auch Hauptbremszylinder 2 kann das von ihm abgegebene Druckmittel über die Leitungen 22a, 22b und die Bremskreisabschnitte 13a, 13b in jeweils die beiden Radbremsen 8a, 8b bzw. 8c, 8d des Bremskreises I, II einspeisen.

Modul 40 umfasst beispielsgemäß neben dem Motor-Pumpen-Aggregat 42, 43 einen an einer Druckseite der Pumpe 42 angeschlossenen Drucksensor 45, welcher beispielsgemäß dem Bremskreis I zugeordnet ist, sowie je Bremskreis I, II ein der Pumpe 42 parallel geschaltetes Ventil 47a, 47b, welches bevorzugt stromlos geschlossen ausgeführt ist.

Modul 40 umfasst weiterhin vorteilhafterweise eine eigene Steuer- und Regeleinheit (nicht dargestellt), welche zur Ansteuerung der Ventile 47a, 47b und des Elektromotors 43 sowie zur Energieversorgung und Signalauswertung des Drucksensors 45 dient.

Die vorhin genannten Komponenten 2, 3, 5, 6a-6d, 7a-7d, 14a, 19, 20, 22a, 22b, 23a, 23b, 25, 26a, 26b, 27, 28, 32, 34, 38, 41a, 41b, 44, 46, 52 sind vorteilhafterweise zu einem elektrohydraulischen Modul zusammen gefasst, das mit dem Bezugszeichen 60 versehen ist. Der Ansteuerung der elektrisch betätigbaren Komponenten des Moduls 60, insbesondere der Ventile 6a-6d, 7a-7d, 23a, 23b, 26a, 26b, 28, 32 und des Elektromotors 35 der ersten Druckbereitstellungseinrichtung 5, dient eine dem Modul 60 zugeordnete erste elektronische Steuer- und Regeleinheit (nicht dargestellt). Die Signale der Sensoren 19, 20, 25 und 44 werden zumindest in dieser elektronischen Steuer- und Regeleinheit verarbeitet.

Um auch bei einem Ausfall der ersten elektronischen Steuer- und Regeleinheit des Moduls 60 eine wegbasierte Ansteuerung der zweiten Druckbereitstellungseinrichtung 49 bzw. des Moduls 40 durchführen zu können, ist der Wegsensor 25 vorteilhafterweise auch mit der zweiten elektronischen Steuer- und Regeleinheit des Moduls 40 verbunden und derart, z.B. redundant oder doppelt, ausgeführt, dass Wegsensor 25 auch bei Ausfall der Steuer- und Regeleinheit des Moduls 60 ein Wegsignal zur Steuerung der zweiten Druckbereitstellungseinrichtung 49 an die Steuer- und Regeleinheit des Moduls 40 liefern kann. Alternativ kann einen separater Wegsensor vorhanden sein, dessen Signal der elektronischen Steuer- und Regeleinheit des Moduls 40 zugeleitet wird.

In einer Normalbremsfunktion der Bremsanlage ("Brake-by-wire"-Betriebsart) ist Hauptbremszylinder 2, und damit der Fahrzeugführer, von den Radbremsen 8a-8d durch die geschlossenen Trennventile 23a, 23b entkoppelt und die Bremskreisabschnitte 13a, 13b sind über die geöffneten Zuschaltventile 26a, 26b mit der ersten Druckbereitstellungseinrichtung 5 verbunden, welche den Systemdruck zur Betätigung der Radbremsen 8a-8d bereitstellt. Simulationseinrichtung 3 ist durch das geöffnete Simulatorfreigabeventil 32 dem Hauptbremszylinder 2 zugeschaltet, so dass das durch die Betätigung des Bremspedals durch den Fahrer im Hauptbremszylinder 2 verdrängte Druckmittelvolumen durch die Simulationseinrichtung 3 aufgenommen wird und die Simulationseinrichtung 3 dem Fahrzeugführer ein gewohntes Bremspedalgefühl vermittelt.

In einer unverstärkten Rückfallbetriebsart der Bremsanlage, z.B. bei einem Ausfall der elektrischen Energieversorgung der gesamten Bremsanlage (z.B. Module 40 und 60), ist Simulationseinrichtung 3 durch das stromlos geschlossene Simulatorfreigabeventil 32 abgeschaltet und die erste Druckbereitstellungseinrichtung 5 ist durch die stromlos geschlossenen Zuschaltventile 26a, 26b von den Bremskreisabschnitten 13a, 13b getrennt. Hauptbremszylinder 2 ist über die Leitungen 22a, 22b mit den stromlos offenen Trennventilen 23a, 23b mit den Bremskreisabschnitten 13a, 13b und damit den Radbremsen 8a-8d verbunden, so dass der Fahrzeugführer durch Betätigung des Bremspedals direkt Druck in den Radbremsen 8a-8d aufbauen kann. Ein Abfließen von Druckmittel in den Druckmittelvorratsbehälter 4 wird durch die stromlos geschlossenen Ventile 7a-7d und 47a, 47b verhindert.

In einer verstärkten Rückfallbetriebsart der Bremsanlage (z.B. bei einem Ausfall der ersten Druckbereitstellungseinrichtung 5) bleiben die Komponenten des Moduls 60 stromlos, d.h. die Simulationseinrichtung 3 ist durch das geschlossene Simulatorfreigabeventil 32 abgeschaltet, die erste Druckbereitstellungseinrichtung 5 ist durch die geschlossenen Zuschaltventile 26a, 26b von den Bremskreisabschnitten 13a, 13b getrennt und der Hauptbremszylinder 2 ist über die offenen Trennventile 23a, 23b mit den Bremskreisabschnitten 13a, 13b verbunden. Bei einer Betätigung des Bremspedals wird das Signal des Wegsensors 25 als Fahrerwunsch genutzt. Entsprechend diesem Signal wird die zweite Druckbereitstellungseinrichtung 49 bzw. der Motor 43 angesteuert. Die hydraulische Rückfallebene wird also durch Förderung von Druckmittelvolumen in der Weise unterstützt, dass der Fahrer, bei geringeren Pedalkräften und Pedalwegen das Fahrzeug sicher und komfortable abbremsen kann. Um die Verfügbarkeit der verstärkten Rückfallbetriebsart der Bremsanlage zu erhöhen, wird das Modul 40 bevorzugt von einer (nicht dargestellten) zweiten elektrischen Energieversorgung versorgt, welche unabhängig von der elektrischen Energieversorgung (z.B. dem Bordnetz) ist, welche das Modul 60 und/oder die Steuer- und Regeleinheit des Moduls 60 versorgt.

Die zweite Steuer- und Regeleinheit des Moduls 40 ist bevorzugt über zumindest eine Datenleitung mit der ersten Steuer- und Regeleinheit des Moduls 60 verbunden.

Bevorzugt umfasst das Modul 40 ein zweikreisiges Motor-Pumpen-Aggregat 42, 43, zwei stromlos geschlossene Ventile 47a, 47b und einen Drucksensor 45, sowie eine Ansteuerelektronik.

Bevorzugt ist das Modul 40 in die Radbremsleitungen 51a, 51c zweier Radbremsen 8a, 8c eingebracht.

Die Ansteuerung des Moduls 40 erfolgt bevorzugt in der Weise, dass das Ausgangssignal eines redundanten (separaten) Pedalweg- oder Winkelgebers 25 einem Solldruck zugeordnet wird. Entsprechend diesem Solldruck wird Motor-Pumpen-Aggregat 42, 43 solange angesteuert, bis dieser Druck erreicht wird.

Löst der Fahrer das Bremspedal, so wird bevorzugt das zusätzlich hinein geförderte Volumen durch Betätigung der stromlos geschlossenen Ventile 47a, 47b abgelassen. Dies können analoge oder digitale Ventile sein.

Um die Verfügbarkeit insgesamt zu erhöhen, wird das Modul 40 in einem Hybrid-Fahrzeug bevorzugt an das zweite Fahrzeugbordnetz angeschlossen.

Weiterhin wird bevorzugt zur Verzögerungserhöhung relativ zum Fahrerkraftanteil die Generatorbremse eines Hybridfahrzeuges genutzt.

Auch ist es bevorzugt, eine IPB (integrierte Parkbremse) zur Verzögerungserhöhung anzusteuern.

Grundsätzlich könnte das Modul 40, oder auch Teile davon (z.B. Ventile, Drucksensor, Elektronik), in das Modul 60 integriert werden.

Die erfindungsgemäße Bremsanlage bietet den Vorteil, dass bei Ausfall der hydraulischen "Brake-by-Wire"-Betriebsart die hydraulische Rückfallebene in der Weise unterstützt wird, dass der Fahrer auch bei einem Fahrzeug mit einer großen Volumenaufnahme mit moderaten Pedalkräften und Pedalwegen das Fahrzeug sicher zum Stehen bringen kann.

Die erfindungsgemäße Bremsanlage bietet weiter den Vorteil, dass sie mit geringen Hauptbremszylinder-Durchmessern funktioniert, da das Druckmittelvolumen für die zweite Druckbereitstellungseinrichtung nicht im Hauptbremszylinder, sondern im Druckmittelvorratsbehälter bereitgehalten wird. Geringe Hauptbremszylinder-Durchmesser sind vorteilhaft bezüglich des Kraftbedarfs durch den Fahrer in der unverstärkten Rückfallbetriebsart.

## Patentansprüche

1. Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, mit
• einem mittels eines Bremspedals betätigbaren Hauptbremszylinder (2) mit einem Gehäuse (21) und zwei Kolben (15, 16), die in dem Gehäuse (21) zwei Druckräume (17, 18) begrenzen, die Bremskreisen (I, II) mit Radbremsen (8a, 8b, 8c, 8d) zugeordnet sind,
• einem Druckmittelvorratsbehälter (4),
• einem elektrisch betätigbaren Einlassventil (6a, 6b, 6c, 6d) je Radbremse zum Einstellen radindividueller Bremsdrücke,
• einer ersten elektrisch steuerbaren Druckbereitstellungseinrichtung (5) zur Druckbeaufschlagung der Radbremsen in der "Brake-by-wire"-Betriebsart,
• insbesondere einer Simulationseinrichtung (3), welche in der "Brake-by-wire"-Betriebsart dem Fahrzeugführer ein angenehmes Bremspedalgefühl vermittelt, und
• einer zweiten elektrisch steuerbaren Druckbereitstellungseinrichtung (49) mit zumindest einem Sauganschluss und einem Druckanschluss, deren Sauganschluss, insbesondere ohne Zwischenschaltung eines Ventils, mit dem Druckmittelvorratsbehälter (4) verbunden ist,
**dadurch gekennzeichnet, dass** der Druckanschluss der zweiten Druckbereitstellungseinrichtung (49) mit zumindest einer Radbremse (8a, 8c) ohne Zwischenschaltung eines Ventils verbunden ist.

2. Bremsanlage nach Anspruch 1, **dadurch gekennzeichnet, dass** die zweite Druckbereitstellungseinrichtung hydraulisch zumindest zweikreisig ausgebildet ist, wobei jeder der Druckanschlüsse mit zumindest einer Radbremse ohne Zwischenschaltung eines Ventils verbunden ist.

3. Bremsanlage nach Anspruch 2, **dadurch gekennzeichnet, dass** die zweite Druckbereitstellungseinrichtung (49) zumindest zwei, von einem Elektromotor (43) gemeinsam angetriebene hydraulische Pumpen (42) mit je einem Sauganschluss und einem Druckanschluss umfasst, wobei jeder der Druckanschlüsse mit zumindest einer Radbremse (8a, 8c) ohne Zwischenschaltung eines Ventils verbunden ist.

4. Bremsanlage nach Anspruch 3, **dadurch gekennzeichnet, dass** jeder der Druckanschlüsse der ersten und der zweiten Pumpe mit genau einer Radbremse (8a, 8c) verbunden ist.

5. Bremsanlage nach Anspruch 4, **dadurch gekennzeichnet, dass** die Druckanschlüsse der ersten und der zweiten Pumpe mit Radbremse (8a, 8c) unterschiedlicher Bremskreise (I, II) verbunden sind.

6. Bremsanlage nach einem der Ansprüche 3 bis 5, **dadurch gekennzeichnet, dass** für die erste und die zweite Pumpe jeweils ein elektrisch betätigbares, insbesondere stromlos geschlossenes und/oder insbesondere analogisiertes oder analog angesteuertes, Ventil (47a, 47b) vorgesehen ist, welches der Pumpe parallel geschaltet ist.

7. Bremsanlage nach einem der Ansprüche 1 bis 6, **dadurch gekennzeichnet, dass** der oder die Druckanschlüsse mit einer Verbindungsleitung zwischen der Radbremse und dem ausgangsseitigen Anschluss des zugehörigen Einlassventils verbunden ist/sind.

8. Bremsanlage nach einem der Ansprüche 1 bis 7, **dadurch gekennzeichnet, dass** eine Druckerfassungseinrichtung (45) vorgesehen ist, welche einen druckanschlussseitigen Druck der zweiten Druckbereitstellungseinrichtung (49) erfasst.

9. Bremsanlage nach einem der Ansprüche 1 bis 8, **dadurch gekennzeichnet, dass** eine erste elektronische Steuer- und Regeleinheit zur Ansteuerung der ersten Druckbereitstellungseinrichtung (5) und eine zweite elektronische Steuer- und Regeleinheit zur Ansteuerung der zweiten Druckbereitstellungseinrichtung (49), und insbesondere der Ventile (47a, 47b), sowie zur Auswertung der Ausgangssignale der Druckerfassungseinrichtung (45) vorgesehen sind.

10. Bremsanlage nach einem der Ansprüche 1 bis 9, **dadurch gekennzeichnet, dass** die zweite Druckbereitstellungseinrichtung (49) in einer eigenständigen Baugruppe (40) angeordnet ist, wobei insbesondere die Baugruppe (40) zusätzlich die Druckerfassungseinrichtung (45) und/oder die zweite elektronische Steuer- und Regeleinheit und/oder die Ventile (47a, 47b) umfasst.

## Claims

1. Brake system for motor vehicles, which brake system can be actuated in a "brake-by-wire" operating mode both by the vehicle driver and independently of the vehicle driver, is preferably operated in the "brake-by-wire" operating mode, and can be operated in at least one fallback operating mode, having
• a master brake cylinder (2) which can be actuated by way of a brake pedal and which has a housing (21) and two pistons (15, 16) which, in the housing (21), delimit two pressure chambers (17, 18) which are assigned to brake circuits (I, II) with wheel brakes (8a, 8b, 8c, 8d),
• a pressure medium reservoir (4),
• an electrically actuable inlet valve (6a, 6b, 6c, 6d) for each wheel brake, for the setting of wheel-specific brake pressures,
• a first electrically controllable pressure provision device (5) for the pressurization of the wheel brakes in the "brake-by-wire" operating mode,
• in particular, a simulation device (3) which, in the "brake-by-wire" operating mode, imparts an acceptable brake pedal feel to the vehicle driver, and
• a second electrically controllable pressure provision device (49) having at least one suction port and one pressure port, the suction port of which is connected, in particular without a valve being connected in between, to the pressure medium reservoir (4), **characterized in that** the pressure port of the second pressure provision device (49) is connected to at least one wheel brake (8a, 8c) without a valve being connected in between.

2. Brake system according to Claim 1, **characterized in that** the second pressure provision device is, in hydraulic terms, of at least two-circuit design, wherein each of the pressure ports is connected to at least one wheel brake without a valve being connected in between.

3. Brake system according to Claim 2, **characterized in that** the second pressure provision device (49) comprises at least two hydraulic pumps (42) which are driven jointly by one electric motor (43) and which have in each case one suction port and one pressure port, wherein each of the pressure ports is connected to at least one wheel brake (8a, 8c) without a valve being connected in between.

4. Brake system according to Claim 3, **characterized in that** each of the pressure ports of the first and of the second pump is connected to precisely one wheel brake (8a, 8c).

5. Brake system according to Claim 4, **characterized in that** the pressure ports of the first and of the second pump are connected to wheel brakes (8a, 8c) of different brake circuits (I, II).

6. Brake system according to one of Claims 3 to 5, **characterized in that**, for the first and the second pump, in each case one electrically actuable valve (47a, 47b), which is in particular closed when deenergized and/or is in particular analogized or actuated in analog fashion, is provided, which valve is connected in parallel with the pump.

7. Brake system according to one of Claims 1 to 6, **characterized in that** the one or more pressure port(s) is/are connected to a connecting line between the wheel brake and the outlet-side port of the associated inlet valve.

8. Brake system according to one of Claims 1 to 7, **characterized in that** a pressure detection device (45) is provided which detects a pressure port-side pressure of the second pressure provision device (49).

9. Brake system according to one of Claims 1 to 8, **characterized in that** a first electronic control and regulation unit for the actuation of the first pressure provision device (5) and a second electronic control and regulation unit for the actuation of the second pressure provision device (49), and in particular of the valves (47a, 47b), and for the evaluation of the output signals of the pressure detection device (45) are provided.

10. Brake system according to one of Claims 1 to 9, **characterized in that** the second pressure provision device (49) is arranged in an independent assembly (40), wherein in particular, the assembly (40) additionally comprises the pressure detection device (45) and/or the second electronic control and regulation unit and/or the valves (47a, 47b).

## Revendications

1. Système de freinage, destiné à des véhicules automobiles, qui peut être commandé en mode « freinage électrique » aussi bien par le conducteur qu'indépendamment du conducteur, qui est de préférence utilisé en mode « freinage électrique » et qui peut être utilisé dans au moins un mode de recul, le système de freinage comprenant
• un maître-cylindre de frein (2) pouvant être actionné au moyen d'une pédale de frein et comportant un boîtier (21) et deux pistons (15, 16) qui délimitent dans le boîtier (21) deux chambres de pression (17, 18) qui sont associées à des circuits de freinage (I, II) pourvus de freins de roue (8a, 8b, 8c, 8d),
• un réservoir d'agent de pression (4),
• une soupape d'admission à commande électrique (6a, 6b, 6c, 6d) par frein de roue destinée à régler des pressions de freinage spécifiques à chaque roue,
• un premier dispositif d'alimentation en pression à commande électrique (5) pour mettre les freins de roue sous pression en mode « freinage électrique »,
• en particulier, un dispositif de simulation (3) qui procure au conducteur une sensation agréable de pédale de frein en mode « freinage électrique », et
• un deuxième dispositif d'alimentation en pression à commande électrique (49) comportant au moins un raccord d'aspiration et un raccord de pression, le raccord d'aspiration étant raccordé au réservoir d'agent de pression (4) en particulier sans interposition de soupape,
**caractérisé en ce que** le raccord de pression du deuxième dispositif d'alimentation en pression (49) est relié à au moins un frein de roue (8a, 8c) sans l'interposition d'une soupape.

2. Système de freinage selon la revendication 1, **caractérisé en ce que** le deuxième dispositif d'alimentation en pression est formé du point de vue hydraulique d'au moins deux circuits, chacun des raccords de pression étant relié à au moins une roue sans l'interposition d'une soupape.

3. Système de freinage selon la revendication 2, **caractérisé en ce que** le deuxième dispositif d'alimentation en pression (49) comprend au moins deux pompes hydrauliques (42) qui sont entraînées conjointement par un moteur électrique (43) et qui comportent chacune un raccord d'aspiration et un raccord de pression, chacun des raccords de pression étant relié à au moins un frein de roue (8a, 8c) sans l'interposition d'une soupape.

4. Système de freinage selon la revendication 3, **caractérisé en ce que** chacun des raccords de pression de la première et de la deuxième pompe est relié exactement à un frein de roue (8a, 8c).

5. Système de freinage selon la revendication 4, **caractérisé en ce que** les raccords de pression des première et deuxième pompes sont reliés à des freins de roue (8a, 8c) de différents circuits de freinage (I, II).

6. Système de freinage selon l'une des revendications 3 à 5, **caractérisé en ce qu'**une soupape à commande électrique (47a, 47b), en particulier analogique ou à commande analogique et/ou en particulier fermée sous courant, est prévue pour la première et la deuxième pompe, laquelle soupape est montée en parallèle avec la pompe.

7. Système de freinage selon l'une des revendications 1 à 6, **caractérisé en ce que** l'au moins un raccord de pression est relié à une ligne de liaison située entre le frein de roue et le raccord côté sortie de la soupape d'entrée associée.

8. Système de freinage selon l'une des revendications 1 à 7, **caractérisé en ce qu'**il est prévu un dispositif de détection de pression (45) qui détecte une pression côté raccord de pression du deuxième dispositif d'alimentation en pression (49).

9. Système de freinage selon l'une des revendications 1 à 8, **caractérisé en ce qu'**une première unité de commande et de régulation électronique est prévue pour commander le premier dispositif d'alimentation en pression (5) et une deuxième unité de commande et de régulation électronique est prévue pour commander le deuxième dispositif d'alimentation en pression (49), et notamment les soupapes (47a, 47b), ainsi que pour évaluer les signaux de sortie du dispositif de détection de pression (45).

10. Système de freinage selon l'une des revendications 1 à 9, **caractérisé en ce que** le deuxième dispositif d'alimentation en pression (49) est disposé dans un ensemble séparé (40), en particulier l'ensemble (40) comportant en plus le dispositif de détection de pression (45) et/ou la deuxième unité de commande et de régulation et/ou les soupapes (47a, 47b).
